# EUROPÄISCHE PATENTANMELDUNG

(11) **EP 3 822 241 A1**
(43) Veröffentlichungstag der Anmeldung: **19.05.2021**
(21) Anmeldenummer: 20207929.9
(22) Anmeldetag: 16.11.2020
(51) Int. Cl.: C04B 40/06, C04B 28/04, C04B 28/06, C04B 28/14

(54) **FUGENMÖRTEL AUF TROCKENMÖRTELBASIS UND DESSEN VERWENDUNG**

(30) Priorität: 15.11.2019 AT 509902019
(71) Anmelder: Baumit Beteiligungen GmbH, 2754 Waldegg (AT)
(72) Erfinder: Pfneisl, Christian, 2870 Aspang (AT); Weißmann, Peter, 2754 Waldegg (AT); Schipfer-Dohr, Katja, 3380 Pöchlarn (AT); Huber, Christian, 2763 Neusiedl bei Pernitz (AT)
(74) Vertreter: Müllner, Martin

(57) **Zusammenfassung**

Der Fugenmörtel auf Trockenmörtelbasis enthält 22-45 Masse-%, vorzugsweise mindestens 28 Masse-%, besonders bevorzugt mindestens 31 Masse-% aluminatzementhaltiges Bindemittel, weiters 1-10 Masse-%, bevorzugt 1-8 Masse-%, besonders bevorzugt 3-6 Masse-% Redispersionspulver, 0,1-2,5 Masse-%, vorzugsweise mindestens 0,2 Masse-%, Beschleuniger, 0,02-0,05 Masse-% Netz- und Dispergiermittel und 30-77 Masse-% Sand, gegebenenfalls zusätzlich bis zu 2 Masse-% Komponenten zur Staubreduzierung und 0,5-2 Masse-%, vorzugsweise 1 Masse-%, Zeolith neben weiteren Bestandteilen. Dieser Fugenmörtel härtet rasch aus: bei trockenem Einbringen in Fugen, Risse, Hohlstellen und dergleichen mit nachfolgender Wasserbenetzung erreicht er nach drei Stunden eine Druckfestigkeit von mindestens 0,3 MPa, nach 24 Stunden eine Druckfestigkeit von mindestens 6 MPa, nach 7 Tagen eine Druckfestigkeit von mindestens 20 MPa und nach 28 Tagen eine Druckfestigkeit von mindestens 24 MPa. Beschrieben wird auch die Verwendung dieses Fugenmörtels, nämlich trockene Einbringung und Einbringen nach vorherigem Anmachen.

## Beschreibung

### Technisches Gebiet

Die vorliegende Erfindung betrifft einen Fugenmörtel auf Trockenmörtelbasis sowie eine Verwendung desselben.

### Stand der Technik

Bei der Mischbauweise werden zwei Arten unterschieden: Das Einbringen von gebundenen Fugenmassen in Fugen von Steinen und Platten, die auf ungebundenem Untergrund verlegt wurden, und das Einbringen von ungebundenen Fugenmassen in Fugen von Steinen und Platten, die auf gebundenem Untergrund verlegt wurden. Letztere Methode findet hier der Vollständigkeit halber Erwähnung, findet aber nur sehr selten Anwendung, daher wird bei der Mischbauweise nur auf erstere Methode näher eingegangen. Die Mischbauweise ist üblicherweise dadurch charakterisiert, dass die Pflastersteine in eine ungebundene grobkörnigere Bettung eingebracht werden und die Fugen mit einem qualitativ hochwertigen zementären Trockenfertigmörtel eingeschlämmt und gefüllt werden. Durch das nachfolgende Rütteln und die entsprechende Fugenbreite wird gewährleistet, dass der Fugenmörtel einige wenige Zentimeter in die Bettung eindringt, somit die Pflastersteine etwas fixiert werden und diese sich, auch bei höherer Belastung, nur mehr in einem sehr geringen Ausmaß verschieben lassen.

Nachteile der Mischbauweise mit zementären Trockenfertigmörteln oder Sand-Zement-Schlämmen sind eine vergleichsweise geringe Belastbarkeit und Schäden (z.B. Risse) bzw. eine mögliche Zerstörung der Fugenmasse durch starke Temperaturschwankungen infolge von auftretenden Spannungen. Weitere Nachteile sind der hohe Reinigungsaufwand und die langen Wartezeiten bis zur Freigabe der befestigten Flächen für den Verkehr. Als vorteilhaft sind die deutlich höhere Lebensdauer der Pflasterung und das Verhindern von Pflanzenwachstum in den Fugen anzusehen.

EP 0401674 A beschreibt die Verwendung säurehärtender Amino-Harze als Bindemittel in Fugenmassen, welche insbesondere zum Verfüllen von Fugen zwischen den im Straßenbau üblichen Pflastersteinen eingesetzt werden. Als Vorteile werden eine ausreichende Festigkeit gegen Wasser- und Witterungseinflüsse sowie gegen mechanische Belastungen, eine einfache Anwendung, eine wirtschaftliche Lösung sowie die natürliche Optik angegeben. Ferner ist es möglich, die Fugenfüllmassen zur Verfugung vertikaler und horizontaler Flächen zu verwenden. Alle Komponenten der Fugenfüllmasse (feinteilige mineralische Füllstoffe, säurehärtende Aminoharze als organische Bindemittel, Formaldehydfänger, bindemittelrückhaltende Komponenten, Härtungsmittel) können vor dem Einbringen (Einkehren oder Einschlämmen) in die Fugen innig vorgemischt werden, es ist aber auch möglich, den Härter nachträglich aufzusprühen.

Nachteilig an dieser Art von Fugenfüllmasse ist die im Vergleich zu zementären Fugenmörteln geringere Belastbarkeit (die maximale Druckfestigkeit erreicht nur ca. 13 MPa). Als wenig praktikabel und umständlich kann der aufwändige Anmischprozess beurteilt werden (das Mischungsverhältnis von Harz und Härter muss exakt eingehalten werden), die Verarbeitungszeit ist zeitlich sehr begrenzt, wenn der Härter bereits beigemengt ist. Die Kosten derartiger Fugenmörtel sind auf Grund des hohen Anteils an organischen Komponenten als hoch bis sehr hoch zu klassifizieren.

Die gebundene Bauweise kann prinzipiell wasserdurchlässig oder wasserundurchlässig hergestellt werden, der gesamte Aufbau der Pflasterfläche wird ausschließlich aus gebundenen Schichten hergestellt. Dies betrifft die Tragschicht (z.B. Drainbeton), den Bettungsmörtel (z.B. Drainmörtel) und auch das Fugenmaterial (zementär gebundener Fugenmörtel oder Kunstharzmörtel). Die Pflastersteine werden bei dieser Bauweise manuell in den frischen Bettungsmörtel hineingetrieben, wobei eine Verdichtung stattfindet.

Die Verarbeitungsweise der Verfugung mit einem hydraulisch abbindenden Mörtel kann folgendermaßen beschrieben werden: Wichtig ist ein Vornässen der Pflastersteine bzw. -platten oder auch das Aufbringen eines Primers/Grundierung bzw. einer Imprägnierung, um ein Aufsaugen des Anmachwassers des Frischmörtels durch die Steine/Platten zu reduzieren bzw. zu unterbinden. Der homogen angemischte Pflastermörtel wird auf der Pflasterfläche verteilt und mit einem Gummischieber o.ä. in die Fugen eingebracht. Nach dem Ansteifen des Materials wird die Oberfläche der Pflasterfläche genässt und mit einem Schwammbrett (händisch mit einem Reinigungsschwamm oder maschinell durch eine Schwammputzmaschine), einem Besen oder dgl. gereinigt. Um eine ausreichende Hydratation des Fugenmörtels und damit einen ausreichenden Festigkeitsaufbau zu gewährleisten, kann eine Verkehrsfreigabe erst nach relativ langen Wartefristen erteilt werden. Dies sind im Normalfall mindestens drei Tage für Fußgänger, sieben Tage für PKW's und 21 Tage für den LKW-Verkehr.

Die gebundene Bauweise wird speziell bei hohen Belastungen durchgeführt, wie z.B. bei öffentlichen Flächen wie Straßen, Kreisverkehren etc.

Vorteile der gebundenen Bauweise:
- Kein Verrutschen der Steine bzw. Platten.
- Kein Unkrautbewuchs in der Fuge.
- Kein Auswaschen des Fugenmaterials durch Starkregen.
- Kehrmaschinenbeständigkeit.
- Standhalten von hohen Belastungen.
- Langlebigkeit, Dauerhaftigkeit.
- Frost- und Frosttausalzbeständigkeit der Konstruktion.

Nachteilig bei der Verwendung zementär gebundener Fugenmörtel ist, dass die Pflastersteine oberflächlich bereits bei Einbringung des Mörtels stark verschmutzen und ein Entfernen nach Aushärtung nur mehr schwer möglich ist. Entsprechend hoch ist der Reinigungsaufwand, der sehr oft auch mit schwerer körperlicher Arbeit (z.B. kniende Reinigung mit einem Schwamm bzw. Schwammbrett) verbunden ist, die sich vor allem bei professioneller Tätigkeit negativ auf die körperliche Gesundheit auswirken kann. Zusätzlich führt die geringe Flexibilität der Gesamtkonstruktion bei zu hohen Spannungen (ausgelöst z.B. durch hohe Temperaturen) zu Rissbildungen, sich lösenden Fugen und daraus folgend zum Herauslösen einzelner Steine aus dem Verband. Auch besteht die Gefahr der Bildung von (Kalk-)Ausblühungen und damit einer Verfärbung der Fuge oder auch der Pflastersteine.

EP 1892228 A beschreibt einen Fugenmörtel. Dieser härtet jedoch nur langsam aus und erreicht nach dem Aushärten nur eine geringe Festigkeit. So erreicht der Fugenmörtel gemäß dieser Schrift - wenn er in die Fugen eingekehrt wird - nur eine Druckfestigkeit von maximal 5,5 N/mm², und maximal 9,2 N/mm², wenn er angemischt in die Fuge eingebracht wird. In beiden Fällen liegen die beschriebenen Druckfestigkeiten nach 24 Stunden unter 0,5 N/mm².

In EP 2913316 A ist ein portlandzementfreies ternäres Bindemittelsystem beschrieben, welches im Wesentlichen aus zwei Calciumaluminaten und mindestens einem Sulfatträger besteht. Dieses Bindemittelsystem ist gemäß dieser Schrift als Fliesenklebemörtel, Spachtelmasse, Dichtschlamm, Fugenmörtel, Estrichbindemittel, Estrichmörtel, Reparaturklebstoff und/oder Verbundabdichtung geeignet. Gemäß den Beispielen in Tabelle 2 wird Redispersionspulver in einem Anteil von meist 36%, mindestens aber 30%, zugesetzt.

In CN 110436856 A ist ein Trockenmörtel beschrieben, dem nur sehr wenig Redispersionspulver beigemengt ist: in den drei Beispielen, bei denen jeweils 1000 g Trockenmörtel beschrieben sind, beträgt der Anteil an Redispersionspulver 1 g bzw. 2 g, also weit unter 1%.

### Kurzbeschreibung der Erfindung

Ziel der vorliegenden Erfindung ist es, einen Fugenmörtel bereitzustellen, der eine rapide Abbinde- und Festigkeitsentwicklung und ein außerordentlich früh erreichtes hohes Festigkeitsniveau aufweist, um sehr rasch die Herstellung hoch belastbarer befestigter Flächen zu ermöglichen.

Weiters soll es möglich sein, mit dem erfindungsgemäßen Mörtel befestigte Flächen zu reparieren, beispielsweise durch das Verfüllen von Rissen oder Hohlräumen in Beton, keramischen, mineralischen aber auch bitumengebundenen Untergründen.

Dies wird erfindungsgemäß dadurch erreicht, dass der Fugenmörtel
- 22-45 Masse-%, vorzugsweise mindestens 28 Masse-%, besonders bevorzugt mindestens 31 Masse-% Bindemittel, das Aluminatzement enthält,
- weiters 1-10 Masse-%, bevorzugt 1-8 Masse-%, besonders bevorzugt 3-6 Masse-% Redispersionspulver,
- 0,1-2,5 Masse-%, vorzugsweise mindestens 0,2 Masse-% Beschleuniger,
- 0,02-0,05 Masse-% Netz- und Dispergiermittel und
- 30-77 Masse-% Sand
enthält.

Durch diese Zusammensetzung wird eine rasche Abbindung ermöglicht und ein hohes Festigkeitsniveau sichergestellt, wobei dieses rasch nach der Verfugung erreicht wird.

Der erfindungsgemäße Mörtel ist geeignet, um einerseits als Fugenmörtel in der Verlegung von Natursteinen, Pflastersteinen und -platten in Mischbauweise und in gebundener Bauweise und andererseits um für die Verfüllung von Rissen, Hohlstellen und Fehlstellen flächiger fester Untergründe verwendet zu werden.

Der Anteil an Aluminatzement im Fugenmörtel soll 1-20%, bevorzugt 2-10% betragen, und der Aluminatzement ist bevorzugt ein Sulfoaluminatzement.

Weiters kann der Fugenmörtel zusätzlich bis zu 2 Masse-% Komponenten zur Staubreduzierung enthalten. Das verringert die Staubentwicklung bei der Verwendung des erfindungsgemäßen Fugenmörtels. Weiters soll festgehalten werden, dass durch Staubbindemittel in der Regel auch bessere Verdichtungseigenschaften des eingekehrten Trockenmörtels resultieren. Es kommt zu geringen Reibungseigenschaften zwischen den pulverförmigen Bestandteilen des Trockenmörtels, die Fließfähigkeit im trockenen Zustand nimmt zu und der trockene Mörtel verdichtet und kompaktiert besser.

Der erfindungsgemäße Mörtel erreicht bei trockenem Einbringen in Fugen, Risse, Hohlstellen und dergleichen mit nachfolgender Wasserbenetzung nach drei Stunden eine Druckfestigkeit von mindestens 0,3 MPa, nach 24 Stunden eine Druckfestigkeit von mindestens 6 MPa, nach 7 Tagen eine Druckfestigkeit von mindestens 20 MPa und nach 28 Tagen eine Druckfestigkeit von mindestens 24 MPa. Der erfindungsgemäße Mörtel hat somit bei trockenem Einbringen bereits nach 24 Stunden eine höhere Festigkeit als die Endfestigkeit des Mörtels gemäß der oben erwähnten EP 1892228 A (6 MPa gegenüber 5,5 MPa).

Diese hohen Festigkeitswerte und vor allem das rasche Erreichen dieser ermöglichen eine rasche Verwendung der behandelten Fläche nach dem Einbringen des Mörtels in Fugen, Risse, Hohlstellen und dergleichen. Diese Zeitersparnis birgt unter anderem wirtschaftliche Vorteile, da z.B. Reparaturzeiten oder die Zeiten bis zur möglichen Begehung und Belastung von Flächen reduziert werden. Weiters wird dadurch Frost- bzw. Frosttausalzbeständigkeit ermöglicht, sowie eine Eignung für hohe Verkehrsbelastungen erreicht.

Weiters ist es vorteilhaft, wenn der Fugenmörtel 0,5-2 Masse-%, vorzugsweise 1 Masse-%, Zeolith enthält. Durch die Zugabe von Zeolith wird die Durchsumpfung des Fugenmörtels verbessert und die Neigung zur Rissbildung verringert.

Die Verwendung des erfindungsgemäßen Fugenmörtels ist nach einer Ausführungsform so konzipiert, dass die Verwendung folgende Schritte umfasst:
- Reinigen einer zu verfugenden Fläche;
- trockene Verteilung des Fugenmörtels bis zur vollständigen Füllung der Fugen;
- trockene Reinigung der Fläche;
- Beregnung der Fläche;
- Endreinigung der Fläche.

Diese Verwendung des erfindungsgemäßen Fugenmörtels stellt durch das Reinigen der zu verfugenden Flächen sicher, dass der Fugenmörtel an den Fugen oder ähnlichem und nicht an möglichen Verschmutzungen anliegt. Die trockene Verteilung des Fugenmörtels ermöglicht für das Personal einfache Einbringung in etwaige Fugen und dergleichen, da der Überschuss an Fugenmörtel einfach abgekehrt werden kann und der Rest des Fugenmörtels in den Fugen zurückbleibt. Die bereits erwähnte nachfolgende trockene Reinigung kann beispielsweise mit einem Besen durchgeführt werden. Durch die Beregnung wird der Fugenmörtel benässt und nach der Benässung und Durchsumpfung des Trockenmörtels beginnt der Aushärtungsvorgang. Nach der Beregnung findet die Endreinigung statt, die eine saubere Fläche sicherstellt.

Bei dieser Verwendung kann nach der vollständigen Füllung der Fugen der Fugenmörtel eingerüttelt werden, und anschließend können die Fugen mit weiterem Fugenmörtel aufgefüllt werden, bis die Fugen vollständig gefüllt sind. Dies erlaubt eine Verdichtung des Fugenmörtels und kann so lange wiederholt werden, bis eine vollständige Verfüllung der Fugen vorliegt. Das Einrütteln kann mittels einer Rüttelplatte etc. erfolgen.

Weiters kann erfindungsgemäß der Endreinigungsschritt aus mehreren Teilschritten bestehen, nämlich aus einer ersten Reinigung der gesamten Fläche 30 bis 90 Minuten nach der Beregnung und aus einer endgültigen Reinigung am nächsten Tag. 30-90 Minuten nach der Beregnung ist der Fugenmörtel, der nicht in den Fugen ist, an der Oberfläche der befestigten Fläche noch weich genug, dass er von einem Wasserstrahl weggespült werden kann, was eine angenehme schnelle erste Reinigung ermöglicht. Am nächsten Tag ist es möglich, die Mörtelreste, die schon oberflächlich an der zu verfugenden Fläche anhaften, zu entfernen, dies ist besonders zügig und mit geringer Arbeitsbelastung mit einem Hochdruck-Wasserstrahl möglich.

Daher ist nach einer Ausgestaltung der Erfindung vorgesehen, dass die Endreinigung mit zumindest einem Hochdruckwasserstrahl erfolgt. Die Endreinigung mittels Hochdruckwasserstrahls hat sich in der Praxis als sowohl zeiteffizient als auch wenig belastend für das Personal erwiesen. Insbesondere im Vergleich zur bisher üblichen Schwammreinigung ist der Vorteil erheblich.

Nach einer weiteren Ausführungsform ist die Verwendung des erfindungsgemäßen Fugenmörtels wie folgt konzipiert:
- Reinigen der zu verfugenden Fläche;
- Anmischen des Fugenmörtels mit Wasser;
- Einbringen des Fugenmörtels in die zu verfugende Fläche;
Endreinigung der Fläche.

Durch diesen Vorgang wird zunächst sichergestellt, dass sich der Fugenmörtel tatsächlich mit den Fugen verbindet und nicht mit etwaigem Schmutz. Dadurch, dass der Fugenmörtel außerhalb der Fugen angemischt wird, wird eine höhere Festigkeit erreicht. Das Einbringen des Fugenmörtels kann so lange erfolgen, bis der Fugenmörtel nicht mehr einsickert. Bei kleinen zu verfugenden Flächen können beispielsweise Schnabeltassen verwendet werden, und es kann der Fugenmörtel zielgerichtet in die Fugenbereiche eingebracht und verteilt werden. Alternativ kann auch bei größeren zu verfugenden Flächen der Mörtel mit einem Gummischieber verteilt werden. Nachdem der Fugenmörtel mit der zu verfugenden Fläche plan abschließt, kann die Endreinigung durchgeführt werden, die sicherstellt, dass die Fläche keine Verschmutzung von der Verfugung davonträgt.

Weiters kann diese weitere Verwendung derart durchgeführt werden, dass der Endreinigungsschritt aus mehreren Teilschritten besteht, nämlich einer ersten gründlichen Reinigung nach Einbringen des Fugenmörtels, vorzugsweise mit einem Schwammreinigungsverfahren, einer Reinigung 30-90 Minuten nach der ersten gründlichen Reinigung, vorzugsweise mit einem Hochdruck-Wasserstrahl, und einer endgültigen Reinigung am nächsten Tag, vorzugsweise mit einem Hochdruck-Wasserstrahl.

Dieser Endreinigungsschritt ist ähnlich jenem Endreinigungsschritt, der bereits bei der Beschreibung des Verfahrens mit Einbringung des Mörtels im trockenen Zustand erläutert wurde. Der neu angeführte Schritt beinhaltet allerdings direkt nach dem Einbringen eine Schwammreinigung und keine Trockenreinigung. Da der Mörtel bereits angemischt in die Fugen eingebracht wird, sind die Verschmutzungen durch den Mörtel bereits nass bzw. feucht und dadurch leichter durch einen Schwamm zu entfernen. Die weiteren Schritte der Endreinigung weisen die oben bereits erwähnten Vorteile auf.

Der Hochdruckwasserstrahl kann durch ein Reinigungsgerät mit zumindest einer rotierenden Düse erzeugt werden, oder durch ein Reinigungsgerät mit zumindest einer feststehenden Düse und einer Bürste. Dies gilt sowohl für die trockene Einbringung als auch für die Einbringung des angemischten Mörtels.

Schließlich ist es von Vorteil, wenn zur einfacheren Reinigung nach dem ersten Reinigungsschritt die gesamte Fläche mit einer Verfugungshilfe und/oder einem Verdunstungsschutz behandelt wird. Dies dient zur besseren Reinigungsfähigkeit der zu verfugenden Fläche, da dadurch oberflächlich ein leichter Trennungsfilm zwischen befestigter Fläche und dem applizierten Fugenmörtel entsteht.

Beispielrezeptur (alle Prozentangaben sind Masse-%):
1. 28% Portlandzement (Bindemittel)
2. 5,0% Sulfoaluminatzement (Bindemittel)
3. 2,0% Gips-Anhydrit (Bindemittel)
4. 1,0% Zeolith (Zusatzstoff)
5. 5,0% Vinylacetat-Ethylen (Redispersionspulver)
6. 0,04% Netz- und Dispergiermittel auf Basis Polyglycolester
7. a) 0,1% Lithiumcarbonat (Beschleuniger)
   b) 0,4% Natriumbicarbonat (Beschleuniger)
8. 0,1% Zitronensäure (Verzögerer)
9. 1,0% Staubbindemittel auf Weißöl-Basis
10. 0,05% Polycarboxylatether (Fließmittel)
11. 0,2% Entschäumer auf Alkoxan-Copolymer-Basis
12. ad 100% Kalksteinkörnung (etwa 57%)

Allgemein kann der Fugenmörtel folgende Komponenten aufweisen (alle Prozentangaben sind Masse-%):
1. **Bindemittel** auf Basis Portlandzement (CEM I bzw. CEM II bzw. CEM III)
   Anteil: 10-40%, bevorzugt 20-30%
2. **Bindemittel** auf Basis Aluminatzement (Sulfoaluminatzement, Tonerdeschmelzzement kristallin oder amorph, Aluminiumhydroxid amorph)
   Anteil: 1-20%, bevorzugt 2-10%
3. **Bindemittel** auf Basis Calciumsulfat (Gips)
   Anteil: 0,1-10%, bevorzugt 0,1-5%
4. **Zusatzstoffe:** latent hydraulische mehlfeine Zusatzstoffe wie Mikrosilika, Metakaolin, Zeolithe, Trass, Feinstmehle auf Basis Quarz, Kalkstein etc. Anteil: 0-2%, bevorzugt 0-1%
5. **Redispersionspulver** auf Basis Vinylacetat-Ethylen, Styrolacrylat, Styrolbutadien, Reinacrylat sowie Copolymere von VeoVA, VAC/VeoVA, VAC/VeoVA/E, Vinylterpolymere, Vinylacetat/Vinylversatat, Vinylacetat/Vinylchlorid, Vinylacetat-Acryl, VAC/VeoVA/Acryl, VAM/Acryl. Anteil: 0-10%, bevorzugt 1-8%, besonders bevorzugt: 3-6%
6. **Netz- und Dispergiermittel** auf Basis von Ethylenoxid/Propylenoxid-Copolymeren, Polyglycolestern, Alkylpolyglycolethern, Glycolderivaten wie z.B. Ethylenglycol, Propylenglycol; modifizierten Polysiloxanen, Alkali-Laurylsulfaten, alkoxylierten Polymeren, Polyoxiethan(propyl)diolen, Alkylsulfonaten, Alkylbenzolsulfonaten, Ethandiyl-Propylheptylen, Alkali-Olevinsulfonaten, synthetischen Polyelektrolythen, Zubereitungen aus Polycarbonsäuren sowie aus Phosphonaten; hochpolymeren Polysacchariden, Polyalkylsulfonaten; Gemische von Tensiden auf Basis Fettalkoholen (z.B. Fettalkoholpolyethylen-glycolether, Methylestersulfonaten, Fettalkoholsulfaten etc.); Fettsäureamid-Alkylbetainen, Natrium-Polynaphthylmethansulfonaten. Anteil: 0,005-0,15%, bevorzugt 0,02-0,05%
7. **Beschleuniger** auf Basis von Alkalihydroxiden, Alkalicarbonaten wie Lithiumcarbonat, Natriumcarbonat oder Natriumbicarbonat; Alkalialuminaten, Alkalisilikaten, Alkali- und Erdalkalichloriden, Alkali- und Erdalkaliformiaten wie zum Beispiel Calciumformiat, Alkali- und Erdalkaliflouriden, Alkali- und Erdalkalinitriden, Erdalkaliacetaten wie Calciumacetat oder Magnesiumacetat. Anteil: 0,05-0,8%, bevorzugt 0,1-0,6%
8. **Verzögerer** auf Basis von Hydroxycarbonsäuren wie Weinsäure, Zitronensäure, Apfelsäure oder Wirkstoffe auf Basis von Phosphaten, Phosphonsäuren, Sulfonaten, Zuckern, Proteinen, Aminosäuren und Salzen dieser Verbindungen. Anteil: 0,01-0,5%, bevorzugt 0,05-0,3%
9. **Staubbindemittel** auf Basis von Weißölen (Paraffinölen), Siliconölen, Mischungen von Polyolen und Cyclohexanpolycarbonsäure-Derivaten; Ethylenoxid/Propylenoxid-Blockcopolymeren, speziellen Monoalkoholen, Alkandiolen, Glycolen, Fettalkoholen, Polyvinylalkoholen, Polyethylenglycolen, aliphatischen Ethern; aliphatisch gesättigten Monocarbonsäuren, ungesättigten Monocarbonsäuren, Fettsäuren und deren Salzen; Fettsäureestern, N-Alkyl-N-Alkanolaminen, Propylencarbonaten, Acetaten, aliphatischen Phosphorsäureestern; Zelluloseethern, Alkoxylaten, Methyl-Ethyl-Fettsäureethern, Cyclohexanon, Methylisobutylketon, Methylheptylketon, Polytetrafluorethylen, Perflurpolymethylisopropylether, Polysiloxan-Polyether-Copolymeren. Anteil: 0-2%, bevorzugt 0,1-1%
10. **Fließmittel** auf Basis Polycarboxylatether (PCE), Naphtalinsulfonat, Melaminsulfonat, Ligninsulfonat.
   Anteil: 0-0,5%, bevorzugt 0,02-0,2%
11. **Entschäumer** auf Basis von pflanzlichen Ölen, mineralischen Ölen, Polysiloxanen, Polyglycolen, Polyglycolestern, ethoxylierten/propoxylierten Alkoholen, organischen Polymeren, Phosphorestern, Mischungen aus Kohlenwasserstoffen und Polyglycolen; organomodifizierten Siloxanen, Acetylendiol, Fettsäureamid-Alkylbetainen, alkoxylierten Polymeren, Mischungen aus Polyether-Polyolen und amorpher Silica; Polyethern, Mischungen aus Polyethern, Polyolen und Estern; Mischungen aus Hydrocarbonen; Alkoxan-Copolymer-Emulsionen; Mischungen aus Polyether-Polyolen, natürlichen Fetten und amorpher Silica; Mischungen aus Polyether-Polyolen und Estern; hydrophoben und hydrophilen Estern, hydrophilen und hydrophoben Polyolen, Di-ter-butyl-p-Kresol, Mischungen aus Fettalkoholalkoxylaten und Polysiloxanen.
   Anteil: 0,01-0,5%, bevorzugt 0,05-0,3%

**Sande/Zuschlagstoffe/Füllstoffe** auf Basis Kalkstein, Dolomit und Quarzsand bzw. Abmischungen davon. Darüber hinaus sind alle Sande/Zuschlagstoffe/Füllstoffe geeignet, die auch für Beton- und Mörtelanwendungen geeignet sind.
Anteil: ad 100%
Für eine optimale Durchsumpfung hat sich folgende beispielhafte **Sandsieblinie** als optimal herauskristallisiert:

**Tabelle 1**

| | **Anteil** | **bevorzugt** |
|---|---|---|
| Siebrückstand 0,09 mm: | 55-80% | 66-70% |
| Siebrückstand 0,25 mm: | 50-75% | 63-67% |
| Siebrückstand 0,5 mm: | 45-70% | 55-59% |
| Siebrückstand 1,0 mm: | 15-35% | 24-28% |
| Siebrückstand 2,0 mm: | 0-10% | 0-5% |

Diese Sieblinie ermöglicht eine schnelle homogene Durchsumpfung und trägt somit zur Festigkeitsentwicklung bei.

### Kurze Beschreibung der Zeichnungsfiguren

Die Erfindung soll nun anhand der beiliegenden Figuren weiter erläutert werden, die unter anderem den Ablauf von zwei Verwendungen zeigen:
a) trockene Einbringung:
   Fig. 1 zeigt eine erste Reinigung der zur verfugenden Fläche;
   Fig. 2 zeigt eine Ausbringung einer Verfugungshilfe / eines Verdunstungsschutzes;
   Fig. 3 zeigt eine trockene Ausbringung des Fugenmörtels;
   Fig. 4 zeigt einen Einrüttelvorgang;
   Fig. 5 zeigt eine erste oberflächliche Reinigung;
   Fig. 6 zeigt eine Beregnung der zu verfugenden Fläche;
   Fig. 7 zeigt eine Erstreinigung mittels eines Hochdruck-Wasserstrahls;
   Fig. 8 zeigt eine Endreinigung mittels eines Hochdruckwasserstrahlreinigers;
b) nasse Einbringung
   Fig. 9 zeigt einen Anmischvorgang des Fugenmörtels;
   Fig. 10 zeigt das Einbringen des Fugenmörtels mit einem Gummischieber;
   Fig. 11 zeigt eine erste Reinigung mit einem Schwamm;
   Fig. 12 zeigt die Schwindung eines nicht erfindungsgemäßen Fugenmörtels;
   Fig. 13 zeigt die Schwindung eines erfindungsgemäßen Fugenmörtels.

### Beschreibung der Ausführungsarten

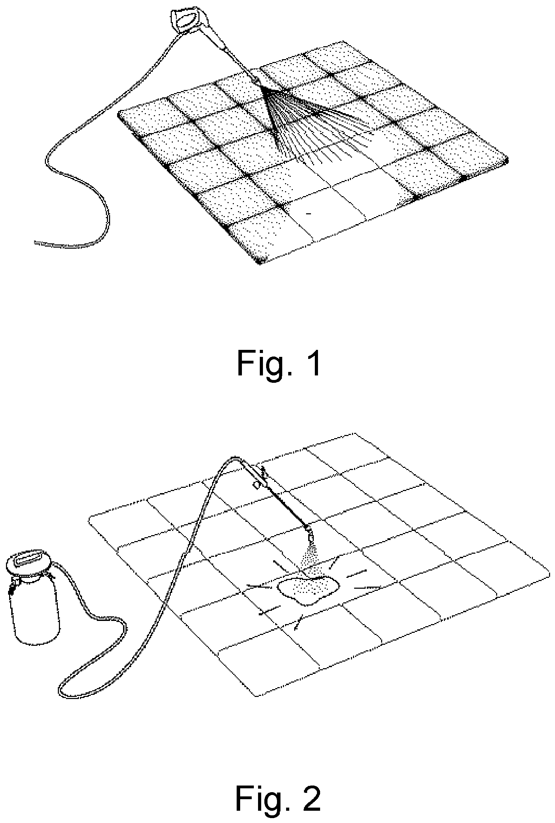

Der in Fig. 1 dargestellte Vorgang zeigt eine erste Reinigung, die mit einem Wasserstrahl durchgeführt werden kann. Diese wird bevorzugt 24-48 Stunden vor der Verfugung durchgeführt.

In Fig. 2 ist eine mögliche Ausbringung einer Verfugungshilfe / eines Verdunstungsschutzes dargestellt, hier wird sie bzw. er über einen Sprühkopf ausgebracht.

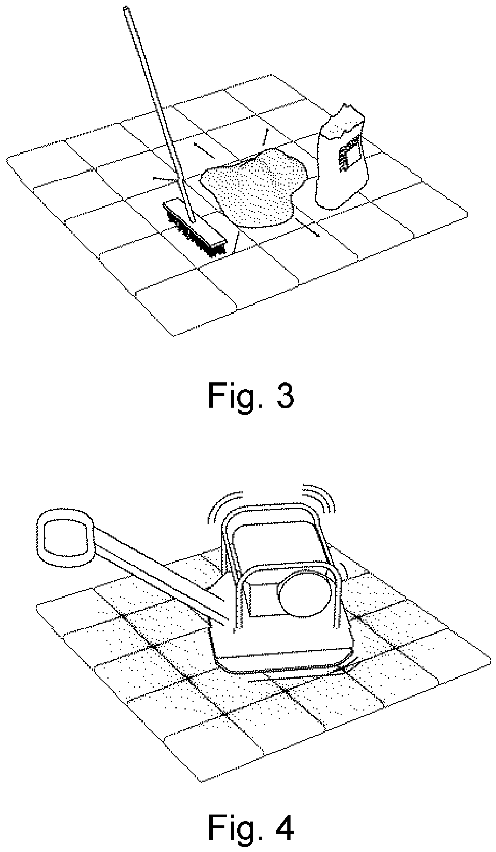

Fig. 3 zeigt den Ausbringungsvorgang, in diesem Fall wird eine großflächige Ausbringung durchgeführt. Hierbei wird der trockene Fugenmörtel mit einem Besen in die Fugen gekehrt, dadurch wird eine rasche Ausbringung ermöglicht.

In Fig. 4 ist ein Einrüttelvorgang dargestellt. Dieser kann mittels Rüttelplatten erfolgen. Nachdem der Fugenmörtel verdichtet wurde, kann dieser wieder nachgefüllt und erneut verdichtet werden. Dies kann solange durchgeführt werden, bis keine weitere Verdichtung mehr möglich ist und die Fugen vollständig mit Trockenmörtel aufgefüllt sind.

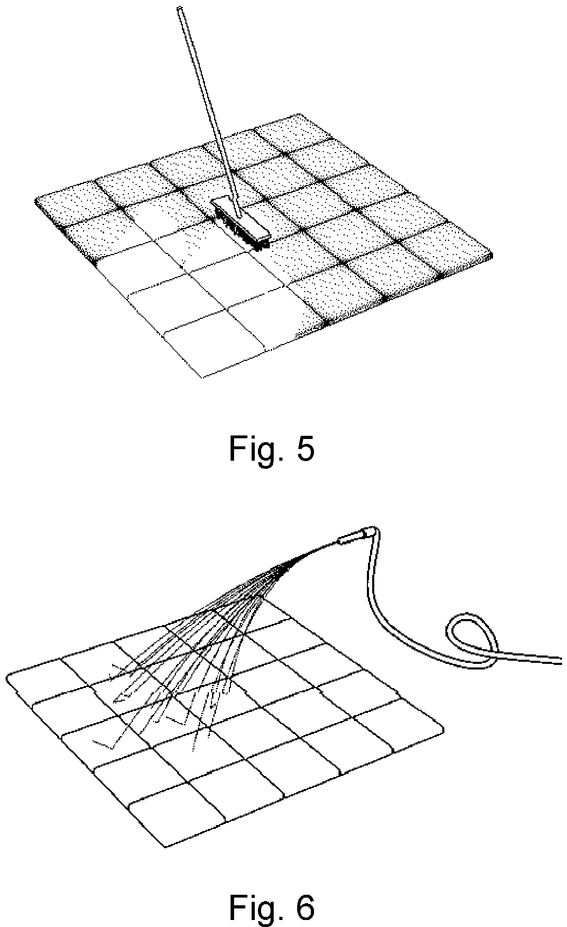

Wie in Fig. 5 gezeigt, kann nach der trockenen Ausbringung eine oberflächliche Reinigung erfolgen. Diese ist bevorzugt trocken und kann beispielsweise mit einem Besen durchgeführt werden, wie in Fig. 5 dargestellt ist.

Fig. 6 zeigt den Beregnungsvorgang. Die Beregnung kann problemlos unter der Verwendung eines Schlauchs mit einem feinen Wassersprühstrahl stattfinden.

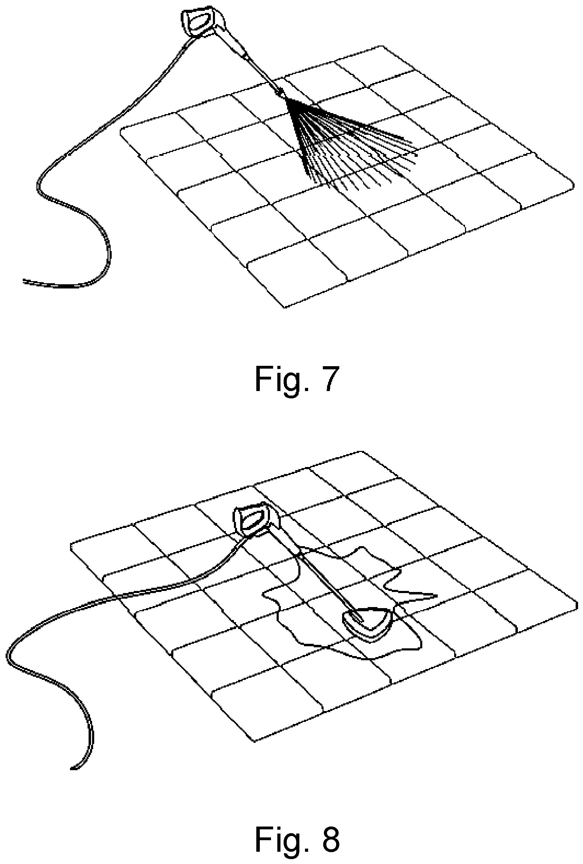

Fig. 7 zeigt einen Reinigungsvorgang. Dieser kann wie in Fig. 7 dargestellt mit einem Hochdruckwasserstrahlreiniger durchgeführt werden. Hierbei ist ein üblicher Düsenabstand rund 40 cm.

In Fig. 8 ist ein Reinigungsvorgang gezeigt, bei dem ein Hochdruck-Wasserstrahl-Reiniger verwendet wird. In Fig. 8 wird dabei ein Oberflächenreinigungsaufsatz verwendet. Dieser lässt sich besonders effizient für eine erste Reinigung nach der Beregnung verwenden.

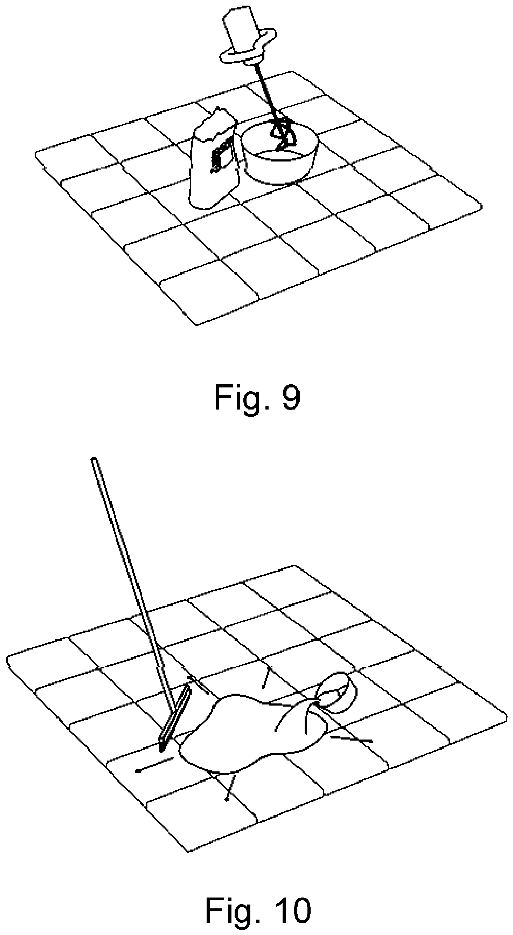

In Fig. 9 ist ein Anmischvorgang des Fugenmörtels gezeigt. Hier ist eine maschinelle Anmischung mittels eines Rührwerks dargestellt.

Die Ausbringung des angemischten Fugenmörtels kann besonders bei größeren Flächen mittels eines Gummischiebers erfolgen, wie in Fig. 10 gezeigt. Die Verwendung eines Gummischiebers sorgt bei größeren Flächen für eine deutliche Zeitersparnis.

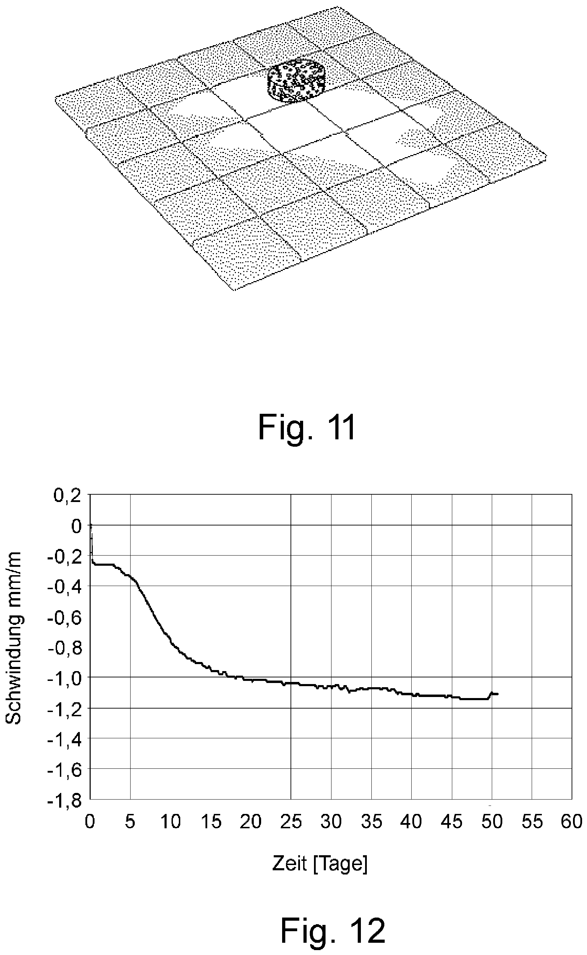

In Fig. 11 ist eine Schwammreinigung von einer Fläche, die mit bereits angemischtem Fugenmörtel verfugt wurde, gezeigt. Alternativ zu einem einfachen Schwamm, wie in Fig. 11 dargestellt, kann auch ein Schwammbrett oder eine Schwammputzmaschine verwendet werden. Bevorzugt wird die Schwammreinigung unmittelbar nach der Ausbringung und dem ersten Ansteifen des angemischten Fugenmörtels durchgeführt. Hierbei lässt sich ein Großteil der Verschmutzung durch den Fugenmörtel am einfachsten beheben. Später werden dann noch Reinigungsvorgänge entsprechend Fig. 7 und/oder 8 durchgeführt.

Anhand der folgenden Beispiele wird der Vorteil der erfindungsgemäßen Menge an Redispersionspulver erläutert. Die Zusammensetzung A ist ein konventioneller Fugenmörtel mit einem Anteil an Redispersionspulver wie bei der bereits erwähnten CN 110436856 A , enthält also nur sehr wenig Redispersionspulver, nämlich 0,2%; die Zusammensetzung B entspricht weitgehend der oben beschriebenen Beispielsrezeptur, enthält insbesondere 5% Redispersionspulver; und die Zusammensetzung C ist ein hochvergüteter Fugenmörtel, dessen Anteil an Redispersionspulver der bereits erwähnten EP 2913316 A entspricht, sie enthält also sehr viel Redispersionspulver, nämlich 36%.

Im Detail waren die Zusammensetzungen wie folgt (alle Angaben sind Masse-%):

**Tabelle 2**

| | **A** | **B** | **C** |
|---|---|---|---|
| mineralische Bindemittel | 32 | 33 | 18 |
| **Redispersionspulver** | **0,2** | **5** | **36** |
| Additive/Verarbeitungshilfen | 1,3 | 9,9 | 3 |
| Sand 0 - 1mm | 66,5 | 52,1 | 43 |
| SUMME | 100 | 100 | 100 |

Dabei ergaben sich folgende Eigenschaften:
- **Handling/Gefährdung:** Bei A und B gutes Handling, keine Gefährdung; C ist jedoch auf Grund des hohen pulverförmigen Organikanteils staubexplosionsgefährdet; Explosionsschutz bei Produktion und Handling ist notwendig. Hohe Gefahr ab 20% Redispersionspulver.
- **Verarbeitbarkeit:** Bei A war die Verarbeitbarkeit in Ordnung, etwas "resch", wenig Cremigkeit; B zeigte gute, leichtgängige Verarbeitbarkeit; und C zeigte hingegen hohe Klebrigkeit, war sehr zäh und neigte verstärkt zur Hautbildung, war also schlecht zu verarbeiten.
- **Durchhärtung:** A zeigte normale Durchhärtung, die durch die geringen Mengen Redispersionspulver kaum beeinflusst war; B zeigte schnelle Durchhärtung durch die spezielle Kombination Bindemittel-Schnellsystem/Redispersionspulver; C zeigte extrem träges Durchhärten durch hohen Polymergehalt + Hilfsstoffe (das im Redispersionspulver eingesetzte Antiblockmittel Polyvinylalkohol wirkt stark verzögernd), starke Hautbildung an der Oberfläche, die weitere Durchhärtung der Fuge war stark verzögert.
- **Verfilmung:** A zeigte kaum bis keine Verfilmungswirkung, wegen der sehr geringen Einsatzmenge Redispersionspulver; B zeigte hingegen eine gute und rasche Verfilmung, das Bindemittel-Schnellsystem bindet mineralisch Wasser, es kommt zu einem chemischen Trocknungsprozess; C wiederum zeigte eine extrem langsame Verfilmung; sehr lange Dauer, bis die volle Wirkung der Dispersion entfaltet ist; daher ist die Anwendung bei hohen Schichtstärken problematisch, es ergibt sich eine erhöhte Anfälligkeit für Ausschwemmungen bei früher Wasserbelastung wie z.B. Witterungsregen.
- **Schwindung/Rissesicherheit:** Bei A wird durch den extrem geringen Anteil an Redispersionspulver die Rissesicherheit gar nicht bis kaum verbessert; B zeigt hingegen keine Schwindung und gute Rissesicherheit; C zeigt schließlich eine stark erhöhte Trockenschwindung durch hohen Wasser- und Redispersionspulvergehalt, somit besteht hohe Rissegefahr.
- **Raumstabilität:** Die Raumstabilität ist bei A und B sehr gut, bei C zeigt sich hingegen ein Einfallen der Fugen, je höher der Redispersionspulvergehalt, desto stärker.
- **E-Modul/Elastifizierung:** Bei A zeigt sich wegen des geringen Anteils an Redispersionspulver keine Elastifizierung, es ist ein sprödes System, es gibt kaum bis keine Senkung des E-Moduls; B zeigt hingegen eine gute Elastifizierung und eine deutliche Senkung des E-Moduls; C zeigt eine hohe Elastifizierung und einen sehr geringen E-Modul.
- **Haftung/Flankenhaftung:** Bei A tritt wegen des geringen Anteils an Redispersionspulver keine bis kaum eine Haftungsverbesserung auf mineralischen Untergründen auf, schlechte Flankenhaftung; B und C zeigen hingegen gute Haftung auf mineralischen Untergründen und extrem gute Flankenhaftung.
- **Schlagzähigkeit:** Bei A tritt wegen des geringen Anteils an Redispersionspulver keine bis kaum eine Verbesserung der Schlagzähigkeit auf. B zeigt hingegen gute Schlagzähigkeit durch die Kombination Bindemittel-Schnellsystem/Redispersionspulver; bei C ist die Schlagzähigkeit sehr gut.
- **Festigkeiten:** A und B zeigen hohe Früh- und Endfestigkeiten, wogegen C kaum Frühfestigkeit zeigt, massive Festigkeitseinbußen hat und nur sehr geringe Endfestigkeiten erreicht.
- **Optik der fertigen Pflasteroberfläche nach dem Verfugen:** Bei A ist die Optik gut, es gibt allerdings einen leichten "Zementschleier"; B zeigt eine sehr gute, saubere Oberfläche; bei C ergibt sich aber eine glänzende Polymerschicht auf den Pflastersteinen, die sich nicht entfernen lässt.

Tabellarisch lässt sich das wie folgt zusammenfassen:

**Tabelle 3**

| | **A** | **B** | **C** |
|---|---|---|---|
| Handling | ++ | ++ | -- |
| Verarbeitbarkeit | + | + | -- |
| Durchhärtung | ++ | ++ | -- |
| Dauer bis zur vollständigen Verfilmung | ++ | + | -- |
| Schwindung/Risssicherheit | o | + | -- |
| Raumstabilität | o | + | -- |
| E-Modul/Elastifizierung | -- | + | ++ |
| Haftung/Flankenhaftung | -- | ++ | ++ |
| Schlagzähigkeit | -- | + | ++ |
| Festigkeiten | ++ | ++ | -- |

### Zeichenerklärung :

++ extrem positiv
+ positiv
o neutral
- negativ
-- extrem negativ

Aus der Tabelle ist ersichtlich, dass der Anteil von 1-10 Masse-% Redispersionspulver (RDP), bezogen auf das Trockenmörtelgewicht, den idealen Bereich darstellt, um Schwachstellen im gesamten Eigenschaftsprofil, die mit RDP-Gehalten <1% (im konkreten Fall: 0,2%) und >10% (im konkreten Fall: 36%) auftreten, zu vermeiden.

Um eine Vergleichbarkeit der Prüfergebnisse sicherzustellen, wurden alle Prüfungen der drei getesteten Fugenmörtel im Anmischverfahren durchgeführt.

Es wurde ersichtlich, dass sich bei einer Wasserzugabe von 13% sowohl beim Fugenmörtel A als auch beim erfindungsgemäßen Fugenmörtel B eine gute Verarbeitungskonsistenz ergibt, sich der hochvergütete Fugenmörtel C jedoch mit dieser Wassermenge nicht anmischen lässt. Hier war eine zusätzliche Wasserzugabe von 3,3% notwendig, um jene Konsistenz, bei der eine Verarbeitung des Mörtels erst möglich wird, zu erreichen. Trotz der hohen Wasserzugabemenge zeigte sich durch den hohen Gehalt an Redispersionspulver eine derart hohe Zähigkeit und Klebrigkeit des Mörtels, dass es nahezu unmöglich war, den Fugenmörtel aus dem Mörtelgefäß zu entnehmen.

Bei einem Verarbeitungsversuch im Labormaßstab, bei welchem eine gepflasterte Fläche mit den drei Fugenmörteln im Vergleich verfugt wurde (im Anmischverfahren), wurde festgestellt, dass auch die Verfugung bzw. das Einbringen des hochvergüteten Fugenmörtels C in die Fugen auf Grund der klebrigen, dicken und zähen Konsistenz kaum möglich war. Mit den beiden anderen Fugenmörteln A und B war die Verfugung problemlos möglich.

Auch die weiteren Verarbeitungsschritte bei der Verfugung zeigten deutlich die nachteiligen Eigenschaften vor allem vom Fugenmörtel C im Vergleich zu Fugenmörtel A und dem erfindungsgemäßen Fugenmörtel B. Die Reinigung der Oberfläche der Pflastersteine mit dem Schwamm bei Fugenmörtel C war nicht möglich, da der Fugenmörtel so stark an den Steinen klebt, dass die Reinigung nur mittels Abschaben mit Hilfe einer Spachtel möglich war. Zudem bildeten sich in den Unebenheiten bzw. Rillen und Poren der Pflastersteine weiße, optisch nicht ansehnliche Polymerablagerungen. Ferner zeigte sich nach dem Trocknen beim Fugenmörtel C ein "kunststoffartiger" Film auf den Steinoberflächen. Diese äußerst nachteiligen beschriebenen Eigenschaften konnten bei den beiden anderen Fugenmörteln A und B nicht festgestellt werden.

Die Zeit bis zur Durchhärtung wurde mittels Vicat-Messung geprüft. Dabei wird der Frischmörtel in eine Form gefüllt und eine konusförmige Nadel mit definierter Masse und Geometrie kontinuierlich von der Mörteloberfläche in den Mörtel getaucht. Bei fortschreitender Versteifung der Probe werden verringerte Eindringtiefen gemessen, d.h. je schneller die Durchhärtung erfolgt, desto schneller werden geringe Eindringtiefen erreicht. Der Abbindebeginn ist erreicht, wenn eine 100 g-Nadel eine Eindringtiefe von 20 mm ±2 mm erreicht, das Abbindeende bei einer Eindringtiefe von 1-2 mm, gemessen jeweils von der Oberfläche der Probe.

Dabei wurden folgende Abbindewerte gemessen (alle Angaben in Minuten):

**Tabelle 4**

| | **A** | **B** | **C** |
|---|---|---|---|
| Abbindebeginn | 65 | 23 | 182 |
| Abbindeende | 145 | 30 | 280 |

Die erhaltenen Abbinde-Werte des hochvergüteten Fugenmörtels C sind jedoch nicht aussagekräftig, da sich durch den hohen Gehalt an Redispersionspulver eine oberflächliche Haut bildet. Die Vicat-Nadel drückt diese Haut mit nach unten, ohne durchzustechen, das wirkliche Abbinden des darunterliegenden Mörtels dauert tatsächlich noch deutlich länger.

Die nachteiligen Eigenschaften von hohen Redispersionspulvergehalten zeigen sich auch bei der Festigkeitsentwicklung. In folgender Tabelle ist ersichtlich, dass der Fugenmörtel A und der erfindungsgemäße Fugenmörtel B bereits nach einem Tag brauchbare (Fugenmörtel A) bis hohe (erfindungsgemäßer Fugenmörtel B) Festigkeiten (gemessen an 4 mm x 4 mm x 16 mm Prismen gemäß EN 196) aufweisen, beim Fugenmörtel C ist eine Messung nicht möglich, da noch kein Festigkeitsaufbau stattgefunden hat. Auch nach 7 Tagen (!) weist der hochvergütete Fugenmörtel nahezu keine Festigkeit auf:

**Tabelle 5**

| **Prüfparameter** | **A** | **B** | **C** |
|---|---|---|---|
| Trockenrohdichte 1d [kg/m³] | 1954 | 2122 | 1570 |
| Biegezugfestigkeit 1d [MPa] | 3,2 | 4,8 | 0,3 |
| Druckfestigkeit 1d [MPa] | 10,3 | 22 | nicht bestimmbar |
| Trockenrohdichte 7d [kg/m³] | 2005 | 2186 | 1530 |
| Biegezugfestigkeit 7d [MPa] | 5,1 | 9,2 | 1,3 |
| Druckfestigkeit 7d [MPa ] | 24,9 | 48,9 | 0,4 |

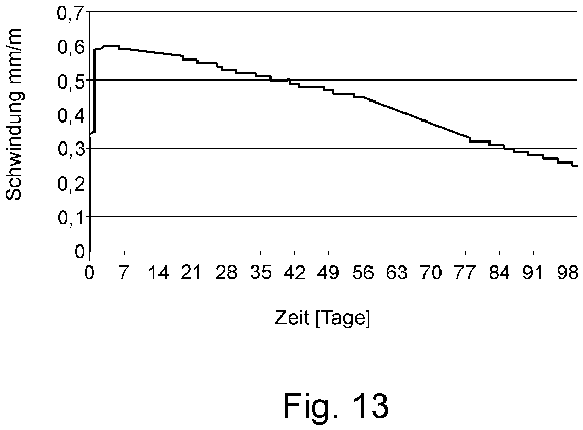

Die vorteilhaften Eigenschaften eines Redispersionspulvergehalts von 1-10 Masse-% in Bezug auf die Schwindung von Fugenmörteln können durch die Prüfergebnisse der Schwindungsmessung der Mörtel in sogenannten Schwindrinnen belegt werden, die in den Fig. 12 und 13 dargestellt sind. Fig. 12 zeigt die Schwindung des Fugenmörtels A, Fig. 13 zeigt die Schwindung des Fugenmörtels B.

Aus diesen beiden Abbildungen ist ersichtlich, dass der Fugenmörtel A mit 0,2% Redispersionspulvergehalt eine vergleichsweise erhöhte Schwindung aufweist, sodass keine Verbesserung der Rissesicherheit durch diesen Redispersionspulvergehalt zu erwarten ist. Der erfindungsgemäße Fugenmörtel zeigt hingegen keine Schwindung, sondern sogar ein leichtes Quellverhalten, eine gute Rissesicherheit ist somit gegeben.

Die Schwindrinnen-Prüfung mit dem hochvergüteten Fugenmörtel C (36% Redispersionspulvergehalt) musste abgebrochen werden, da auf Grund der starken Trocknungsschwindung die Mörtelstruktur durch Risse zerstört wurde und die gemessenen Werte daher nicht aussagekräftig waren.

## Patentansprüche

1. Fugenmörtel auf Trockenmörtelbasis, **dadurch gekennzeichnet, dass** der Fugenmörtel
22-45 Masse-%, vorzugsweise mindestens 28 Masse-%, besonders bevorzugt mindestens 31 Masse-% Bindemittel, das Aluminatzement enthält,
weiters 1-10 Masse-%, bevorzugt 1-8 Masse-%, besonders bevorzugt 3-6 Masse-% Redispersionspulver,
0,1-2,5 Masse-%, vorzugsweise mindestens 0,2 Masse-%, Beschleuniger, 0,02-0,05 Masse-% Netz- und Dispergiermittel und
30-77 Masse-% Sand
enthält.

2. Fugenmörtel nach Anspruch 1, **dadurch gekennzeichnet, dass** der Anteil an Aluminatzement im Fugenmörtel 1-20%, bevorzugt 2-10% beträgt.

3. Fugenmörtel nach Anspruch 1 oder 2, **dadurch gekennzeichnet, dass** der Aluminatzement ein Sulfoaluminatzement ist.

4. Fugenmörtel nach einem der Ansprüche 1 bis 3, **dadurch gekennzeichnet, dass** er zusätzlich bis zu 2 Masse-% Komponenten zur Staubreduzierung enthält.

5. Fugenmörtel nach einem der Ansprüche 1 bis 4, **dadurch gekennzeichnet, dass** der Mörtel bei trockenem Einbringen in Fugen, Risse, Hohlstellen und dergleichen mit nachfolgender Wasserbenetzung nach drei Stunden eine Druckfestigkeit von mindestens 0,3 MPa, nach 24 Stunden eine Druckfestigkeit von mindestens 6 MPa, nach 7 Tagen eine Druckfestigkeit von mindestens 20 MPa und nach 28 Tagen eine Druckfestigkeit von mindestens 24 MPa erreicht.

6. Fugenmörtel nach einem der Ansprüche 1 bis 5, **dadurch gekennzeichnet, dass** der Fugenmörtel 0,5-2 Masse-%, vorzugsweise 1 Masse-%, Zeolith enthält.

7. Verwendung des Fugenmörtels nach einem der Ansprüche 1 bis 6 ohne Anmischvorgang, **dadurch gekennzeichnet, dass** die Verwendung folgende Schritte umfasst:
Reinigen einer zu verfugenden Fläche;
trockene Verteilung des Fugenmörtels nach einem der Ansprüche 1 bis 6 bis zur vollständigen Füllung der Fugen;
trockene Reinigung der Fläche;
Beregnung der Fläche;
Endreinigung der Fläche.

8. Verwendung nach Anspruch 7, **dadurch gekennzeichnet, dass** nach der vollständigen Füllung der Fugen der Fugenmörtel nach einem der Ansprüche 1 bis 6 eingerüttelt wird, und man anschließend die Fugen mit weiterem Fugenmörtel auffüllt, bis die Fugen wieder vollständig gefüllt sind.

9. Verwendung nach Anspruch 7 oder 8, **dadurch gekennzeichnet, dass** der Endreinigungsschritt aus mehreren Teilschritten besteht, nämlich dass 30 bis 90 Minuten nach der Beregnung eine erste Reinigung der gesamten Fläche durchgeführt wird und am nächsten Tag eine endgültige Reinigung durchgeführt wird.

10. Verwendung nach einem der Ansprüche 7 bis 9, **dadurch gekennzeichnet, dass** die Endreinigung mit zumindest einem Hochdruckwasserstrahl erfolgt.

11. Verwendung des Fugenmörtels nach einem der Ansprüche 1 bis 6 mit einem Anmischvorgang, **dadurch gekennzeichnet, dass** die Verwendung folgende Schritte umfasst:
Reinigen der zu verfugenden Fläche;
Anmischen des Fugenmörtels nach einem der Ansprüche 1 bis 6 mit Wasser;
Einbringen des Fugenmörtels in die zu verfugende Fläche;
Endreinigung der Fläche.

12. Verwendung nach Anspruch 11, **dadurch gekennzeichnet, dass** der Endreinigungsschritt aus mehreren Teilschritten besteht, nämlich einer ersten gründlichen Reinigung nach Einbringen des Fugenmörtels, vorzugsweise mit einem Schwammreinigungsverfahren, einer Reinigung 30 bis 90 Minuten nach der ersten gründlichen Reinigung, vorzugsweise mit einem Hochdruck-Wasserstrahl, und einer endgültigen Reinigung am nächsten Tag, vorzugsweise mit einem Hochdruck-Wasserstrahl.

13. Verwendung nach Anspruch 10 oder 12, **dadurch gekennzeichnet, dass** der zumindest eine Hochdruckwasserstrahl durch ein Reinigungsgerät mit zumindest einer rotierenden Düse erzeugt wird.

14. Verwendung nach Anspruch 10 oder 12, **dadurch gekennzeichnet, dass** der zumindest eine Hochdruckwasserstrahl durch ein Reinigungsgerät mit zumindest einer feststehenden Düse und einer Bürste erzeugt wird.

15. Verwendung nach einem der Ansprüche 7 bis 14, **dadurch gekennzeichnet, dass** zur einfacheren Reinigung nach dem ersten Reinigungsschritt die gesamte Fläche mit einer Verfugungshilfe und/oder einem Verdunstungsschutz behandelt wird.
